# FASCICULE DE BREVET EUROPEEN

(11) **EP 3 749 509 B1**
(45) Date de publication et mention de la délivrance du brevet: **16.10.2024**
(21) Numéro de dépôt: 19702656.0
(22) Date de dépôt: 08.02.2019
(51) Int. Cl.: B29C 70/46

(54) **PROCÉDÉ DE FABRICATION D'UNE PIÈCE PRÉIMPRÉGNÉE EN MATÉRIAU COMPOSITE**
VERFAHREN ZUR HERSTELLUNG EINES PREPREG AUS EINEM VERBUNDWERKSTOFF
METHOD FOR MANUFACTURING A PREPREG MADE OF A COMPOSITE MATERIAL

(30) Priorité: 09.02.2018 FR 1851108
(43) Date de publication de la demande: 16.12.2020
(73) Titulaire: Institut de Recherche Technologique Jules VERNE, 44340 Bouguenais (FR)
(72) Inventeur: RENAULT, Thierry, 35800 DINARD (FR); GUÉROULT, Sébastien, 44300 NANTES (FR)
(74) Mandataire: Alatis
(86) Numéro de dépôt international: PCT/EP2019/053186
(87) Numéro de publication internationale: WO 2019/155013

(56) Documents cités:
- EP-A2- 0 084 135
- WO-A1-2005/033393
- WO-A1-2012/118665
- FR-A1- 3 014 731
- US-A1- 2010 215 887

## Description

La présente invention concerne un procédé de fabrication d'une pièce préimprégnée intermédiaire, destinée à former au moins une partie d'une pièce finie, ladite pièce préimprégnée étant réalisée en un matériau composite comportant une matrice en matériau thermoplastique et des fibres de renfort noyées dans la matrice, le procédé comprenant les étapes successives suivantes :
- fournir au moins une couche de renfort et au moins une nappe de matrice en matériau thermoplastique;
- former un complexe avec ladite couche de renfort et ladite nappe de matrice ; et
- disposer le complexe dans un outil de réalisation de la pièce préimprégnée, l'outil de réalisation étant chauffé à une température supérieure à la température de fusion du matériau thermoplastique de sorte que le matériau thermoplastique imprègne les fibres de couche(s) de renfort afin de former une pièce préimprégnée.

On connaît de tels procédés de fabrication. Un tel procédé est utilisé pour fabriquer une pièce préimprégnée thermoplastique en matériau composite intermédiaire, également connue sous le nom de « organo-sheet ». De telles pièces préimprégnées sont ensuite mises en forme, et éventuellement associées à d'autres pièces préimprégnées, pour fabriquer une pièce finie légère et présentant des propriétés mécaniques satisfaisantes. Les pièces finies sont par exemple utilisées dans l'industrie automobile pour former des parties de caisse de véhicule, des panneaux de renfort ou de protection, des parties de sièges ou autre. Le document WO 2012/118665 divulgue les caractéristiques du préambule de la revendication 1.

Les inventeurs ont cependant constaté que la répartition du matériau de la matrice dans la pièce préimprégnée n'est pas satisfaisante lorsque le complexe est soumis à un chauffage et une pression permettant de faire fondre le matériau de la matrice pour imprégner les fibres. En effet, sous l'effet de la température et de la pression, le matériau thermoplastique du complexe tend à fluer vers la périphérie de la pièce préimprégnée, ce qui entraîne une imprégnation non uniforme des fibres. Un tel fluage non souhaité rend le procédé non industrialisable pour la fabrication de préimprégnés aux propriétés notamment mécaniques maîtrisées, dans un procédé haute cadence qui nécessite une forte reproductibilité. De plus, ce phénomène crée un gaspillage non-désiré du matériau thermoplastique.

Un des buts de l'invention est de proposer un procédé de fabrication d'une pièce préimprégnée présentant des propriétés satisfaisantes, offrant une cadence de production élevée, et améliorant l'imprégnation des fibres de la pièce préimprégnée par le matériau thermoplastique.

A cet effet, l'invention a pour objet un procédé de fabrication du type précité dans lequel :
- le complexe est chauffé à une température supérieure à la température de fusion du matériau thermoplastique sans appliquer de pression sur ledit complexe,
- le complexe est chauffé à une température supérieure à la température de fusion du matériau thermoplastique en appliquant une pression de réalisation supérieure à la pression atmosphérique sur le complexe.

Le procédé selon l'invention permet notamment d'améliorer l'imprégnation de fibres par le matériau thermoplastique. En particulier, l'étape de chauffage sans application de pression permet de fondre le matériau thermoplastique sans que celui-ci tende à fluer vers la périphérie de la pièce préimprégnée, et l'étape suivante de chauffage avec application de pression permet d'obtenir une bonne imprégnation de fibres par le matériau thermoplastique.

Selon l'invention, le procédé présente les caractéristiques de la revendication 1.

Ainsi, selon l'invention.
- le procédé comprend les étapes successives suivantes, avant de disposer le complexe dans l'outil de réalisation :
   - disposer au moins la nappe de matrice dans un outil de traitement,
   - chauffer ladite nappe à une température inférieure à la température de fusion du matériau thermoplastique.

Selon des modes de réalisation particuliers de l'invention, le procédé présente l'une ou plusieurs des caractéristiques suivantes, prises isolément ou suivant toute(s) combinaison(s) techniquement possible(s) : telles que définies par les revendications dépendantes.
- la nappe de matrice est disposée dans l'outil de traitement avec le reste du complexe.
- la nappe de matrice est écrasée dans l'outil de traitement par application d'une pression sur ladite nappe.
- la température de l'outil de traitement est comprise entre 70°C et 200°C, et est avantageusement égale à 150°C.
- le matériau thermoplastique comprend du polytéréphtalate d'éthylène.
- le complexe comprend au moins deux nappes de matrice disposées sur un premier côté de la couche de renfort, et au moins une nappe de matrice disposée sur un deuxième côté de ladite couche de renfort.
- le complexe comporte au moins deux couches de renfort, chaque couche de renfort étant disposée entre au moins deux nappes de matrice d'un premier côté et au moins une nappe de matrice d'un deuxième côté.
- les couches de renfort présentent au moins deux orientations différentes de fibres.
- la formation du complexe comprenant lesdites couches de renfort présentant au moins deux orientations différentes de fibres est effectuée en dehors de l'outil de réalisation.
- la pression appliquée sur le complexe par l'outil de réalisation est comprise entre 1 et 20 bars, avantageusement comprise entre 2 et 10 bars.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une illustration des étapes d'obtention d'un complexe avant l'imprégnation des fibres par un matériau thermoplastique dans l'outil de réalisation selon un mode de réalisation de l'invention ;
- la Figure 2 est une représentation d'un complexe avant et après le préchauffage ;
- les Figures 3 à 5 sont des représentations schématiques de l'outil de réalisation selon un premier mode de réalisation de l'invention au cours d'étapes successives du procédé de fabrication ; et
- la Figure 6 est une représentation schématique de l'outil de réalisation selon un deuxième mode de réalisation de l'invention au cours d'une étape du procédé de fabrication.

Le procédé selon l'invention est adapté pour fabriquer des pièces préimprégnées également appelées « organo-sheet ». Ces pièces préimprégnées sont ensuite mises en forme pour fabriquer une pièce finie destinée à constituer par exemple une partie de siège de véhicule automobile, un élément de garnissage tel qu'un panneau de porte, une pièce de caisse, de carrosserie ou autre. La pièce préimprégnée 10 se présente par exemple sous la forme d'une plaque plane rigide.

La pièce préimprégnée 10 comporte une matrice 12 en matériau thermoplastique 13, dans laquelle des fibres de renfort 16 sont noyées.

Le matériau thermoplastique 13 de la pièce préimprégnée 10 est obtenu à partir d'au moins une nappe de matrice 18 non-tissée comprenant le matériau thermoplastique 13. Le matériau thermoplastique 13 comprend avantageusement du polytéréphtalate d'éthylène (PET). On peut aussi utiliser des dérivés du PET, des composés de type polypropylène (PP), des composés polyamides ou d'autres thermoplastiques.

L'épaisseur de la nappe de matrice e₀ avant la réalisation de la pièce préimprégnée 10 est supérieure ou égale à 1 mm, par exemple sensiblement égale à 2 mm. Le PET présente l'avantage d'être peu coûteux par rapport aux matériaux thermoplastiques généralement utilisés, par exemple du polyamide (PA), pour réaliser la matrice de pièces en matériau composite.

Selon un mode de réalisation, la nappe de matrice 18 est formée uniquement de matériau thermoplastique. Ce matériau thermoplastique peut être sous forme de fibres comme dans le cas d'un non-tissé ou sous forme d'un film.

La masse surfacique de la nappe de matrice 18 est par exemple comprise entre 100 g/m² et 500 g/m², et est avantageusement égale à 300 g/m².

Selon un autre mode de réalisation, la nappe de matrice 18 est un semi imprégné de fibres thermoplastiques en PET et de fibres de renfort 16, tel qu'un tissu de fibres comélées de fibres de renfort 16 et de fibres de matériau thermoplastique, ou un cotissé de fibres de renfort 16 et de fibres de matériau thermoplastique. Les fibres de matériau thermoplastique constituent au moins 10%, avantageusement 30% - 60%, en poids de la nappe de matrice 18, et les fibres de renfort 16 constituent au plus 90%, avantageusement 40% - 70%, en poids de la nappe de matrice 18.

Les fibres de renfort 16 dans la nappe de matrice 18 sont par exemple des fibres de verre, ou des fibres de carbone, des fibres aramides, des fibres de basalte, des fibres naturelles ou autres. Les fibres de renfort 16 dans la nappe de matrice 18 peuvent également être un mélange de ces fibres.

Les fibres de renfort 16 noyées dans la matrice sont en outre obtenues à partir d'au moins une couche de renfort 17 comprenant des fibres de renfort 16. Les fibres 16 sont par exemple des fibres de verre, ou des fibres de carbone, des fibres aramides, des fibres de basalte, des fibres naturelles ou autres. La couche de renfort 17 peut également comprendre un mélange de ces fibres. Selon un mode de réalisation, les fibres 16 de la couche de renfort 17 sont de même nature que les fibres 16 de la nappe de matrice 18. En variante, elles sont différentes.

La masse surfacique de la couche de renfort 17 est par exemple comprise entre 100 g/m² et 1000 g/m², et est avantageusement égale à 600 g/m².

La couche de renfort 17 présente avantageusement des fibres tissées unidirectionnelles, des fibres multiaxiales (« *Non Crimp Fabric* » en anglais), ou des couches en fibres de verre présentant des orientations aléatoires.

De telles fibres sont choisies pour renforcer la pièce finie, ce qui permet par exemple de réduire son épaisseur tout en conservant des propriétés mécaniques satisfaisantes. Ainsi, la pièce en matériau composite est allégée par rapport à une pièce réalisée uniquement en matériau thermoplastique tout en présentant des propriétés mécaniques identiques, voire améliorées.

Avantageusement, tout d'abord, au moins une couche de renfort 17 et une nappe de matrice 18 sont déroulées de rouleaux de stockage 19 et positionnées l'une sur l'autre. Selon un exemple particulier, la couche de renfort 17 est prise en sandwich entre les couches de matériau thermoplastique 13.

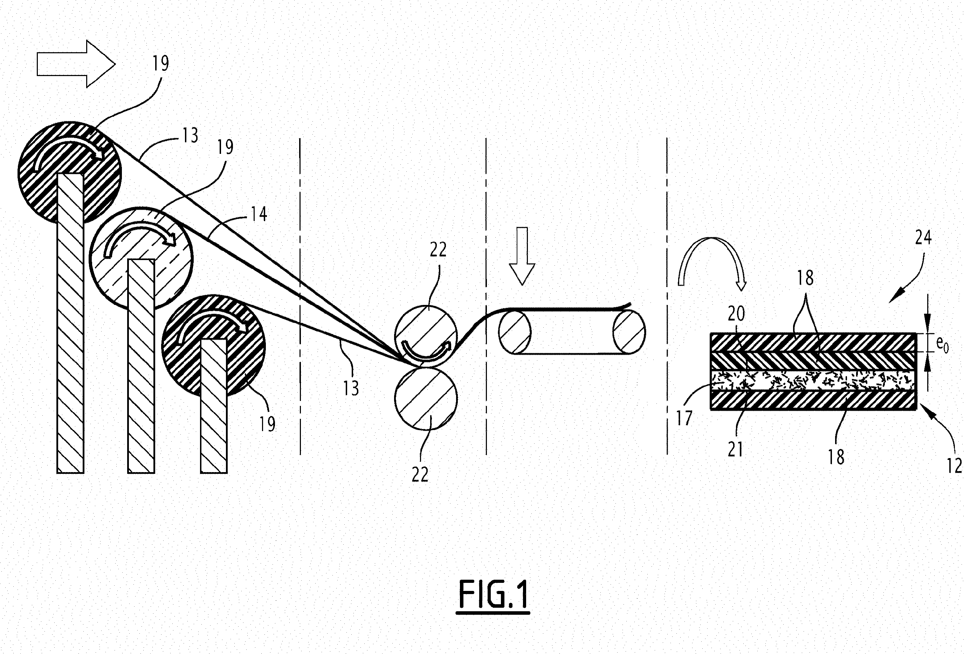

Avantageusement et en référence à la Figure 1, au moins deux nappes de matrice 18 sont disposées sur un premier côté 20 d'au moins une couche de renfort 17, et au moins une nappe de matrice 18 est disposée sur un deuxième côté 21 de ladite au moins une couche de renfort 17. En variante, seulement une nappe de matrice 18 est disposée sur le premier côté 20 de la couche de renfort 17, et aucune nappe de matrice 18 est disposée sur le deuxième côté 21 de la couche de renfort 17. L'empilement obtenu forme un complexe 24 en passant la couche de renfort 17 et la nappe de matrice 18 entre deux rouleaux de préparation 22. On pourra fabriquer, y compris dans un cadre industriel à haute cadence, des empilements d'un nombre élevé de couches, par exemple 8 à 16 couches, par exemple d'au moins 1 à 2 mm d'épaisseur par couche.

Selon un mode de réalisation de l'invention, le complexe 24 est constitué de couches empilées dans l'ordre suivant : couche de renfort, nappe, nappe, couche de renfort, nappe, nappe, couche de renfort. Selon un autre mode de réalisation de l'invention, le complexe 24 est constitué de couches empilées dans l'ordre suivant : couche de renfort, nappe, nappe, couche de renfort, nappe, couche de renfort, nappe, nappe, couche de renfort. Il est entendu que le nombre et l'ordre des couches peuvent varier selon les propriétés souhaitées de la pièce préimprégnée et/ou de la pièce finie à réaliser.

Avantageusement, le complexe 24 comporte au moins deux couches de renfort 17. Les couches de renfort 17 présentent par exemple au moins deux orientations différentes de fibres, ce qui permet d'améliorer les caractéristiques mécaniques de la pièce préimprégnée 10 dans toutes les directions de celle-ci.

Ainsi, pour obtenir une pièce préimprégnée comprenant des fibres dans plusieurs orientations différentes, il est possible de fournir un seul complexe comprenant des fibres dans plusieurs orientations différentes avant d'imprégner ce complexe unique, au lieu de combiner plusieurs complexes chacun comprenant des fibres dans une direction unique.

Selon un mode de réalisation, l'empilement des couches de renfort 17 présentant au moins deux orientations différentes est effectué en dehors de l'outil de réalisation 28 décrit ci-dessous. Ceci permet de préparer les complexes 24 comprenant les couches de renfort 17 en parallèle de l'étape d'imprégnation et ainsi augmenter la cadence de production. Ainsi, le procédé permet de réaliser des pièces préimprégnées à haute cadence et faible coût. Plus précisément, un opérateur peut préparer des complexes 24 par empilement de couches de renfort 17 en dehors de l'outil de réalisation 28, par exemple à proximité de l'outil de réalisation 28 ou à un autre poste éloigné de l'outil. En parallèle, l'outil de réalisation 28 est utilisé pour imprégner des complexes 24 déjà préparés, afin de réserver l'utilisation de l'outil de réalisation 28 à l'imprégnation de complexes 24, ce qui permet d'éviter de former le complexe 24 dans l'outil de réalisation 28 et ainsi de réduire le temps d'immobilisation de l'outil de réalisation 28.

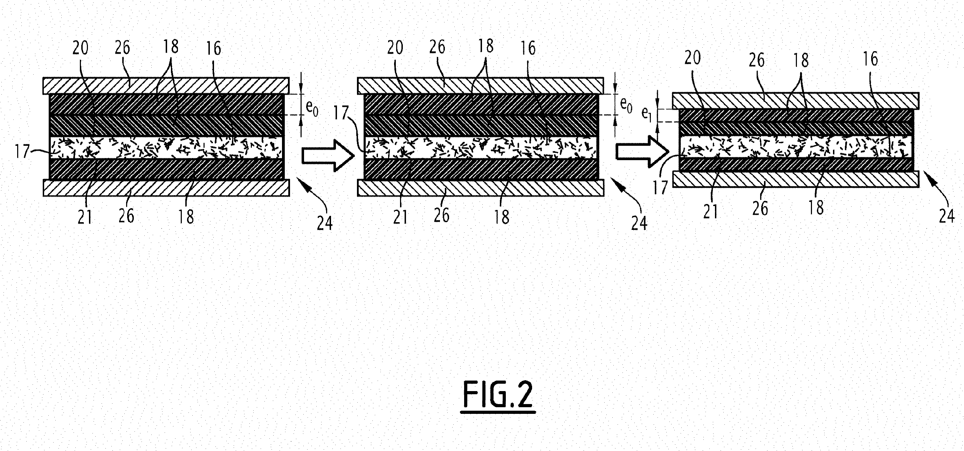

En référence à la Figure 2, après le formage du complexe 24, le procédé comprend une étape de traitement. Le complexe 24 est disposé dans un outil de traitement 26, et l'outil de traitement 26 chauffe le complexe 24 à une température inférieure à la température de fusion du matériau thermoplastique 13.

L'outil de traitement 26 est par exemple formé par deux plaques chauffées entre lesquelles des couches de renfort 17 et/ou des nappes de matrice 18 sont aptes à être disposées. En variante, l'outil de traitement 26 est un outil d'écrasement.

La température de préchauffage par l'outil de traitement 26 est comprise entre 70 et 200°C, avantageusement entre 90°C et 165°C, et est plus avantageusement égale à 150°C.

La durée de traitement est comprise entre 20 et 60 secondes, avantageusement comprise entre 25 et 45 secondes pour un complexe 24.

Avantageusement, l'outil de traitement 26 applique une pression de traitement inférieure à 50 bars, avantageusement comprise entre 5 et 20 bars, sur le complexe 24.

L'étape de préchauffage avec écrasement permet de réduire l'épaisseur de la nappe de matrice 18 et ainsi de réduire le temps d'exposition à la température supérieure à la température de fusion du matériau thermoplastique 13 nécessaire pour former la pièce préimprégnée 10 pendant les étapes ultérieures de réalisation, qui seront décrites ultérieurement.

En variante non-présentée sur les Figures, seules les nappes de matrice 18 sont disposées dans l'outil de traitement 26 et chauffées et éventuellement écrasées par l'outil de traitement 26. Ces nappes écrasées sont ensuite associées aux couches de renfort 17 pour former le complexe 24.

Comme visible sur la Figure 2, cette étape de traitement permet notamment de réduire la porosité et l'épaisseur de nappes de matrice 18 dans le complexe 24 afin de faciliter la suite du procédé de fabrication. L'épaisseur réduite de nappes de matrice e₁ est par exemple sensiblement égale à 0,3 mm à partir de nappes non écrasées d'une épaisseur supérieure ou égale à 1 mm.

Avantageusement, le complexe 24 est ensuite découpé par un dispositif de découpage (non-représenté sur les Figures) en plusieurs complexes découpés formés chacun d'une partie du complexe 24 et comprenant au moins une couche de renfort 17 et des nappes de matrice 18. Le dispositif de découpage est adapté pour découper les complexes 24 de sorte que chacun de ces complexes découpés présente une dimension inférieure ou égale à une dimension correspondante de la pièce finie que la pièce préimprégnée 10 sera destinée à fabriquer.

Avantageusement, les couches de renfort 17 et les nappes de matrice 18 de chaque complexe 24 sont ensuite jointes, par exemple par couture ou piquage de sorte à solidariser localement les couches de renfort 17 et les nappes de matrice 18. La couture est de préférence réalisée en zigzag. En variante, l'assemblage des couches de renfort 17 et des nappes de matrice 18 est effectué avant leur découpage, ou avant leur traitement. Encore en variante, le découpage et/ou la fixation des couches du complexe 24 entre elles peuvent être effectués avant l'étape de préchauffage décrite ci-dessus.

On peut fabriquer des couches de renfort 17 par assemblage, dans un même plan, de morceaux de couches de renfort 17 ayant toute géométrie souhaitée. Les couches ainsi obtenues sont elles-mêmes utilisées pour fabriquer les complexes 24 en les assemblant avec des nappes de matrice 18 qui peuvent également présenter des géométries variables. On peut ainsi éviter d'avoir à découper des complexes 24 de forte épaisseur.

Avantageusement, les coutures les plus sollicitées sont couvertes par des bandes (non-représentées sur les Figures) de fibres unidirectionnelles, par exemple de fibres de carbone, afin de renforcer ces coutures. Les fibres desdites bandes sont orientées sensiblement parallèlement à la direction générale de progression des coutures qu'elles recouvrent.

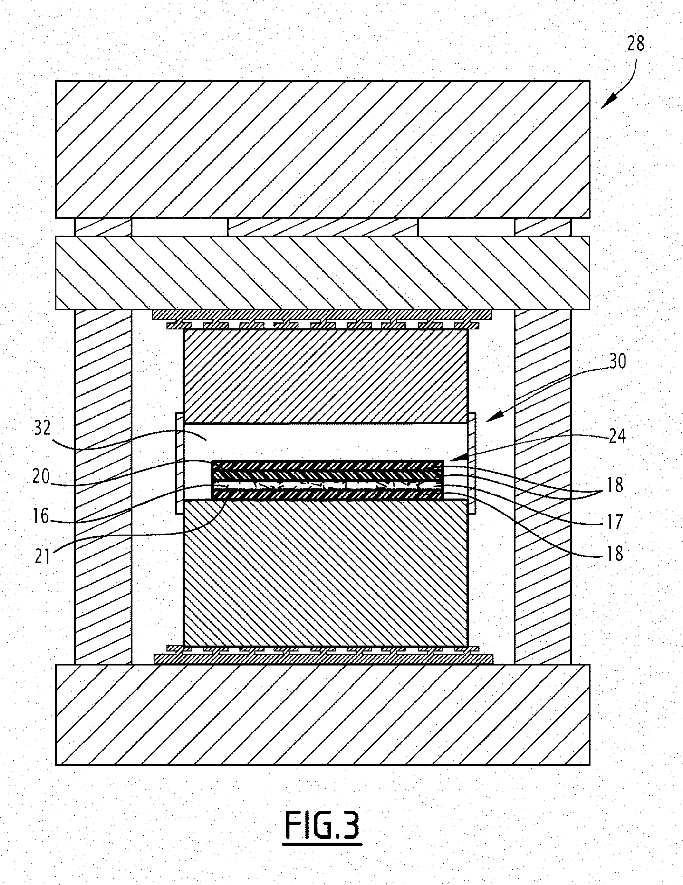

En référence aux figures 3 à 5, les différentes étapes du procédé de fabrication d'une pièce préimprégnée 10 avec un outil de réalisation 28 selon un premier mode de réalisation de l'invention vont à présent être décrites.

Selon le premier mode de réalisation de l'invention, chaque pièce préimprégnée 10 est produite dans un outil de réalisation 28 formé par une presse 30. La presse 30 est mobile entre une position ouverte, dans laquelle les couches de renfort 17 et les nappes de matrice 18 peuvent être disposées dans la presse 30 et une position fermée dans laquelle la presse 30 agit sur ces matériaux 17, 18 pour former la pièce préimprégnée 10.

En référence à la Figure 3, l'outil de réalisation 28 comprend une seule presse 30. Dans une variante, l'outil de réalisation 28 comprend une pluralité de presses 30 pour la réalisation simultanée de plusieurs pièces préimprégnées 10. Les surfaces de la presse 30 en contact avec le complexe 24 sont avantageusement traitées afin d'éviter l'adhésion du matériau thermoplastique 13 sur ces surfaces.

Les surfaces de la presse destinée à être en contact avec le complexe 24 sont sensiblement planes et parallèles.

La presse 30 est chauffée à une température supérieure à la température de fusion du PET, c'est-à-dire à une température supérieure à 260°C. La presse 30 est chauffée par des moyens de chauffage intégrés dans la presse 30, par exemple par induction, par microondes, par circulation d'un fluide caloporteur, ou par des résistances électriques ou par tout autre moyen adapté.

La presse 30 comprend un espace 32 destiné à recevoir le complexe 24. La température de l'espace 32 lors du chauffage est comprise 260°C et 330°C pour du PET. Cette température est adaptée pour l'utilisation d'autres matériaux thermoplastiques.

Comme visible sur la Figure 3, au moins un complexe 24 est disposé dans l'espace 32, la presse 30 étant dans sa position ouverte. L'expression « au moins un complexe 24 est disposé dans l'espace de l'outil de réalisation » ici signifie que le complexe 24 déjà réalisé est placé dans l'outil de réalisation 28, comme décrit précédemment, ou que le complexe 24 est réalisé dans l'outil de réalisation 28.

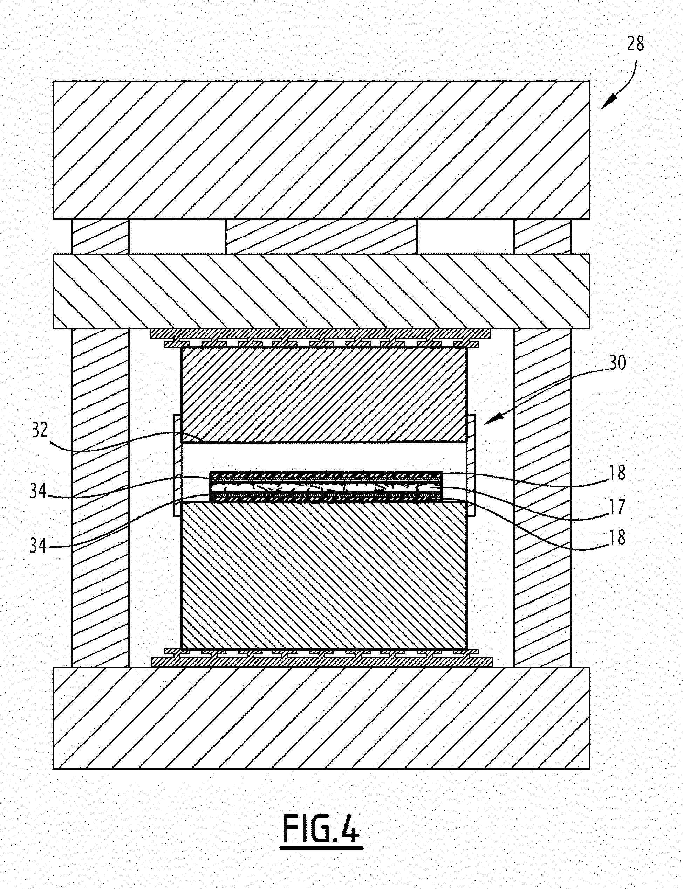

En référence à la Figure 4, la presse 30 chauffe le complexe 24 à une température supérieure à la température de fusion du matériau thermoplastique 13 sans appliquer de pression sur le complexe 24. Par « sans appliquer de pression », on entend que le complexe 24 est laissé à la pression atmosphérique au cours de cette étape de chauffage. Le matériau thermoplastique 13 fond sous l'effet du chauffage, et imprègne partiellement la ou les couches de fibres 17 et forme des couches imprégnées 34 sans que le matériau thermoplastique 13 coule vers les bords des couches sous l'effet d'une pression appliquée sur le complexe 24.

Cette étape de chauffage sans pression dans la presse 30 dure sensiblement entre 30 et 120 secondes, et est avantageusement entre 30 et 50 secondes.

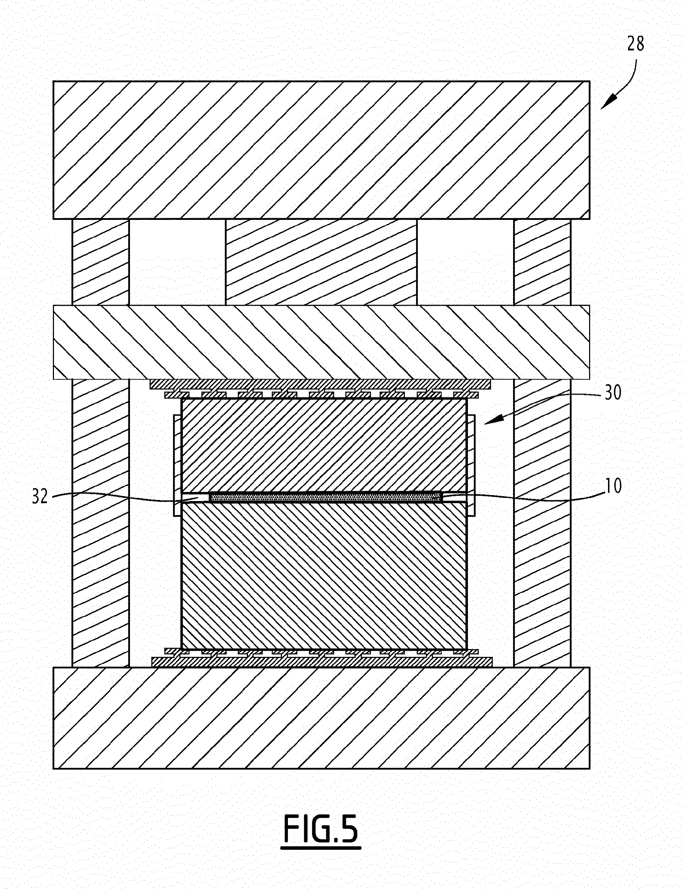

En référence à la Figure 5, la presse 30 est ensuite fermée. La presse 30 continue à chauffer le complexe 24 à une température supérieure à la température de fusion du matériau thermoplastique 13, et simultanément applique une pression de réalisation dans l'espace 32 de sorte à faciliter l'imprégnation du matériau thermoplastique 13 dans les fibres 16 de couches de renfort 17 afin de former une pièce non-consolidée. L'application de la pression alors que le matériau thermoplastique 13 est déjà fondu permet de faire pénétrer ce matériau dans l'épaisseur des couches de renfort 17 en limitant fortement sa tendance à fluer vers la périphérie de la pièce sous l'effet de la pression de réalisation. La pression de réalisation est supérieure à la pression atmosphérique, par exemple comprise entre 1 et 20 bars, avantageusement comprise entre 2 et 10 bars. Dans une variante, la valeur de la pression de réalisation varie temporellement.

Cette étape de chauffage avec application de pression dure entre 20 et 60 secondes, avantageusement comprise entre 20 et 40 secondes.

Ainsi, dans l'espace 32, le matériau thermoplastique 13 se liquéfie et imprègne les fibres 16 de couches de renfort 17 sous l'effet de la chaleur et de la pression dans l'espace 32. La pièce non-consolidée obtenue est souple ou déformable plastiquement.

En comparaison, sans l'étape de traitement dans l'outil de traitement 26, le complexe 24 passe sensiblement 90 secondes pendant l'étape de chauffage sans application de pression, et ensuite 60 secondes pendant l'étape de chauffage avec application de pression dans la presse 30 pour obtenir une pièce préimprégnée 10.

La pièce non-consolidée est ensuite refroidie afin d'obtenir une pièce préimprégnée 10 consolidée.

Avantageusement, la presse 30 est également adaptée pour être refroidie par un dispositif de refroidissement. Un tel dispositif comprend par exemple des conduits disposés au voisinage de l'espace 32. Un fluide de refroidissement, par exemple de l'eau, circule dans les conduits afin de refroidir l'espace 32. Dans ce cas, après la formation de la pièce non-consolidée, la presse 30 étant maintenu fermée, l'espace 32 est refroidi activement afin de consolider la pièce non-consolidée. Par activement, on entend que le dispositif de refroidissement de la presse 30 est utilisé afin d'accélérer le refroidissement de la pièce non-consolidée située dans l'espace 32. La presse 30 étant refroidie à une température inférieure à la température de fusion du PET, le matériau thermoplastique 13 se solidifie et la pièce non-consolidée se consolide alors dans l'espace 32 et forme une pièce préimprégnée 10 consolidée. Avantageusement, pendant le refroidissement une deuxième pression est appliquée dans l'espace 32. La deuxième pression permet notamment de réduire davantage la porosité du matériau thermoplastique 13 de la pièce non-consolidée.

Après la consolidation dans l'espace 32, la pièce préimprégnée 10 consolidée est sortie de la presse 30.

En variante, au lieu de découper le complexe 24 avant l'imprégnation aux dimensions inférieures ou égales à une dimension correspondante de la pièce finie que la pièce préimprégnée 10 sera destinée à fabriquer, la pièce préimprégnée 10 est découpée à la forme à fabriquer après imprégnation.

En variante, le complexe 24 est chauffé dans une première presse et refroidi dans une deuxième presse. Le refroidissement est ainsi effectué dans une autre presse, ce qui permet de maintenir la presse de réalisation de la pièce non-consolidée à la température de chauffage souhaitée et de ne pas avoir à la refroidir et à la chauffer alternativement.

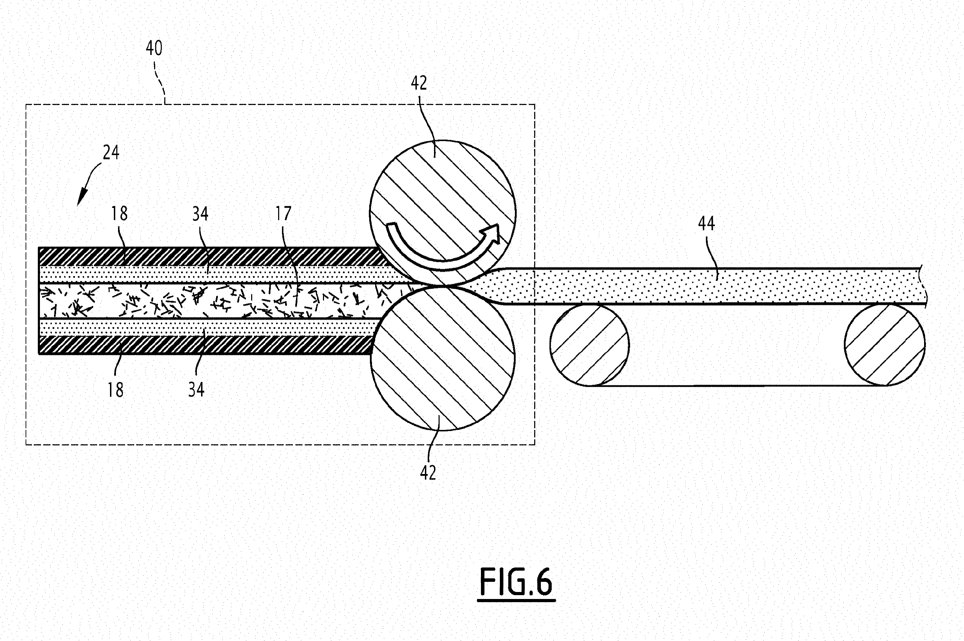

Selon un deuxième mode de réalisation de l'invention représenté sur la Figure 6, après la formation du complexe 24, le complexe 24 est passé dans une enceinte chauffée 40 comprenant les rouleaux de réalisation 42. L'enceinte chauffée 40 est chauffée à une température supérieure à la température de fusion du matériau thermoplastique 13 pour fondre le matériau thermoplastique 13 sans appliquer de pression sur le complexe 24. Les rouleaux de réalisation 42 appliquent une pression de réalisation sur le complexe 24 de sorte que lorsque le complexe 24 passe entre les rouleaux de réalisation 42, du matériau thermoplastique 13 imprègne les fibres 16 de couches de renfort 17 afin de former une couche non-consolidée 44.

La couche non-consolidée 44 est ensuite découpée en pièce présentant la forme de la pièce préimprégnée 10 à fabriquer.

Le procédé décrit ci-dessus permet notamment d'obtenir une pièce préimprégnée 10 en matériau composite présentant une épaisseur e, l'épaisseur e de la pièce préimprégnée 10 étant comprise avantageusement entre 0,4 mm et 15 mm.

Grâce à l'étape de chauffage sans application de pression dans l'outil de réalisation 28 décrite ci-dessus, il est possible de limiter le fluage du matériau thermoplastique 13 en périphérie des pièces préimprégnées 10 lors de l'imprégnation, ce qui améliore les propriétés de la pièce préimprégnée 10.

De plus, l'étape d'écrasement dans l'outil de traitement 26 permet de réduire l'épaisseur des nappes de matrice 18 afin de faciliter les étapes suivantes du procédé.

Par ailleurs, une bonne résistance mécanique de pièce préimprégnée 10 est assurée par l'épaisseur élevée de nappes de matrice 18. En effet, grâce à l'invention décrite ci-dessus, la pièce préimprégnée 10 obtenue possède un module en flexion supérieur à 20 GPa et une contrainte à la rupture en flexion supérieure à 400 MPa, L'invention permet par exemple d'obtenir des organo-sheets présentant des caractéristiques similaires à des organo-sheets réalisés à partir d'une matrice en matériau thermoplastique pour un coût réduit de moitié.

Les pièces préimprégnées 10 ainsi obtenues peuvent être utilisées dans tout procédé connu pour la fabrication de pièces, par exemple d'estampage et/ou de surmoulage.

## Revendications

1. Procédé de fabrication d'une pièce préimprégnée (10) intermédiaire, destinée à former au moins une partie d'une pièce finie, ladite pièce préimprégnée (10) étant réalisée en un matériau composite comportant une matrice (12) en matériau thermoplastique (13) et des fibres de renfort (16) noyées dans la matrice (12), le procédé comprenant les étapes successives suivantes :
- fournir au moins une couche de renfort (17) et au moins une nappe de matrice (18) en matériau thermoplastique (13) ;
- former un complexe (24) avec ladite couche de renfort (17) et ladite nappe de matrice (18) ; et
- disposer le complexe (24) dans un outil de réalisation (28) de la pièce préimprégnée, l'outil de réalisation (28) étant chauffé à une température supérieure à la température de fusion du matériau thermoplastique (13) de sorte que le matériau thermoplastique (13) imprègne les fibres (16) de couche(s) de renfort (17) afin de former une pièce préimprégnée (10)
le procédé comprenant dans l'outil de réalisation (28), les étapes successives suivantes :
- chauffer le complexe (24) à une température supérieure à la température de fusion du matériau thermoplastique (13) sans appliquer de pression sur ledit complexe (24),
- chauffer le complexe (24) à une température supérieure à la température de fusion du matériau thermoplastique (13) en appliquant une pression de réalisation supérieure à la pression atmosphérique sur le complexe (24),
le procédé de fabrication étant **caractérisé en ce qu'**il comprend en outre les étapes successives suivantes,
avant de disposer le complexe (24) dans l'outil de réalisation (28) :
- disposer au moins la nappe de matrice (18) dans un outil de traitement (26),
- chauffer ladite nappe (18) à une température inférieure à la température de fusion du matériau thermoplastique (13).

2. Procédé de fabrication d'une pièce préimprégnée (10) selon la revendication 1, dans lequel la nappe de matrice (18) est disposée dans l'outil de traitement (26) avec le reste du complexe (24).

3. Procédé de fabrication d'une pièce préimprégnée (10) selon la revendication 1 ou 2, dans lequel la nappe de matrice (18) est écrasée dans l'outil de traitement (26) par application d'une pression sur ladite nappe (18).

4. Procédé de fabrication d'une pièce préimprégnée (10) selon l'une quelconque des revendications précédentes, dans lequel la température de l'outil de traitement (26) est comprise entre 70°C et 200°C, et est avantageusement égale à 150°C.

5. Procédé de fabrication d'une pièce préimprégnée (10) selon l'une quelconque des revendications précédentes, dans lequel le matériau thermoplastique (13) comprend du polytéréphtalate d'éthylène.

6. Procédé de fabrication d'une pièce préimprégnée (10) selon l'une quelconque des revendications précédentes, dans lequel le complexe (24) comprend au moins deux nappes de matrice (18) disposées sur un premier côté (20) de la couche de renfort (17), et au moins une nappe de matrice (18) disposée sur un deuxième côté (21) de ladite couche de renfort (17).

7. Procédé de fabrication d'une pièce préimprégnée (10) selon la revendication 6, dans lequel le complexe (24) comporte au moins deux couches de renfort (17), chaque couche de renfort (17) étant disposée entre au moins deux nappes de matrice (18) d'un premier côté (20) et au moins une nappe de matrice (18) d'un deuxième côté (21).

8. Procédé de fabrication d'une pièce préimprégnée (10) selon la revendication 7, dans lequel les couches de renfort (17) présentent au moins deux orientations différentes de fibres (16).

9. Procédé de fabrication d'une pièce préimprégnée (10) selon la revendication 8, dans lequel la formation du complexe (24) comprenant lesdites couches de renfort (17) présentant au moins deux orientations différentes de fibres (16) est effectuée en dehors de l'outil de réalisation (28).

10. Procédé de fabrication d'une pièce préimprégnée (10) selon l'une quelconque des revendications précédentes, dans lequel la pression appliquée sur le complexe (24) par l'outil de réalisation (28) est comprise entre 1 et 20 bars, avantageusement comprise entre 2 et 10 bars.

## Patentansprüche

1. Verfahren zum Herstellen eines Prepreg-Zwischenteils (10), das ausgelegt ist, um mindestens einen Teil eines fertigen Teils zu bilden, wobei das Prepreg-Teil (10) aus einem Verbundmaterial besteht, das eine Matrix (12) aus thermoplastischem Material (13) und Verstärkungsfasern ( 16), die in der Matrix (12) eingebettet sind, umfasst, wobei das Verfahren die folgenden aufeinanderfolgenden Schritte umfasst:
- Bereitstellen mindestens einer Verstärkungsschicht (17) und mindestens einer Matrixbahn (18) aus thermoplastischem Material (13);
- Bilden eines Komplexes (24) mit der Verstärkungsschicht (17) und der Matrixbahn (18); und
- Platzieren des Komplexes (24) in ein Produktionswerkzeug (28) des Prepreg-Teils, wobei das Produktionswerkzeug (28) auf eine Temperatur erhitzt wird, die höher ist als die Schmelztemperatur des thermoplastischen Materials (13), sodass das thermoplastische Material (13) die Fasern (16) mit Verstärkungsschicht(en) (17) imprägniert, um ein Prepreg-Teil (10) zu bilden,
wobei das Verfahren in dem Produktionswerkzeug (28) die folgenden aufeinanderfolgenden Schritte umfasst:
- Erhitzen des Komplexes (24) auf eine Temperatur, die höher ist als die Schmelztemperatur des thermoplastischen Materials (13), ohne Druck auf den Komplex (24) auszuüben,
- Erhitzen des Komplexes (24) auf eine Temperatur, die höher ist als die Schmelztemperatur des thermoplastischen Materials (13), indem auf den Komplex (24) ein Produktionsdruck ausgeübt wird, der größer als der Atmosphärendruck ist,
wobei das Herstellungsverfahren **dadurch gekennzeichnet ist, dass** es ferner die folgenden aufeinanderfolgenden Schritte umfasst, bevor der Komplex (24) in das Produktionswerkzeug (28) platziert wird:
- Platzieren mindestens der Matrixbahn (18) in ein Behandlungswerkzeugs (26),
- Erhitzen der Bahn (18) auf eine Temperatur, die kleiner ist als die Schmelztemperatur des thermoplastischen Materials (13).

2. Verfahren zum Herstellen eines Prepreg-Teils (10) nach Anspruch 1, wobei die Matrixbahn (18) zusammen mit dem Rest des Komplexes (24) in das Behandlungswerkzeugs (26) platziert wird.

3. Verfahren zum Herstellen eines Prepreg-Teils (10) nach Anspruch 1 oder 2, wobei die Matrixbahn (18) im Behandlungswerkzeugs (26) durch Ausüben von Druck auf die Bahn (18) zerkleinert wird.

4. Verfahren zum Herstellen eines Prepreg-Teils (10) nach einem der vorstehenden Ansprüche, wobei die Temperatur des Behandlungswerkzeugs (26) zwischen 70 °C und 200 °C liegt und vorzugsweise 150 °C beträgt.

5. Verfahren zum Herstellen eines Prepreg-Teils (10) nach einem der vorstehenden Ansprüche, wobei das thermoplastische Material (13) Polyethylenterephthalat umfasst.

6. Verfahren zum Herstellen eines Prepreg-Teils (10) nach einem der vorstehenden Ansprüche, wobei der Komplex (24) mindestens zwei Matrixbahnen (18) umfasst, die auf einer ersten Seite (20) der Verstärkungsschicht (17) angeordnet sind, und mindestens eine Matrixbahn (18), die auf einer zweiten Seite (21) der Verstärkungsschicht (17) angeordnet ist.

7. Verfahren zum Herstellen eines Prepreg-Teils (10) nach Anspruch 6, wobei der Komplex (24) mindestens zwei Verstärkungsschichten (17) umfasst, wobei jede Verstärkungsschicht (17) zwischen mindestens zwei Matrixbahnen (18) einer ersten Seite (20) und mindestens einer Matrixbahn (18) einer zweiten Seite (21) angeordnet ist.

8. Verfahren zum Herstellen eines Prepreg-Teils (10) nach Anspruch 7, wobei die Verstärkungsschichten (17) mindestens zwei unterschiedliche Orientierungen von Fasern (16) aufweisen.

9. Verfahren zum Herstellen eines Prepreg-Teils (10) nach Anspruch 8, wobei die Bildung des Komplexes (24), der die Verstärkungsschichten (17) umfasst, die mindestens zwei unterschiedliche Orientierungen von Fasern (16) aufweisen, außerhalb des Produktionswerkzeugs (28) durchgeführt wird.

10. Verfahren zum Herstellen eines Prepreg-Teils (10) nach einem der vorstehenden Ansprüche, wobei der durch das Produktionswerkzeug (28) auf den Komplex (24) ausgeübte Druck zwischen 1 und 20 Bar beträgt, vorteilhafterweise zwischen 2 und 10 Bar.

## Claims

1. A method for manufacturing an intermediate prepreg (10), intended to form at least one portion of a finished part, said prepreg (10) being made from a composite material comprising a matrix (12) made from a thermoplastic material (13) and reinforcing fibers (16) embedded in the matrix (12), the method comprising the following consecutive steps:
- providing at least one reinforcement layer (17) and at least one matrix sheet (18) made of thermoplastic material (13);
- forming a complex (24) with said reinforcement layer (17) and said matrix sheet (18); and
- placing the complex (24) in a prepreg production tool (28), the production tool (28) being heated to a temperature higher than the melting temperature of the thermoplastic material (13) so that the thermoplastic material (13) impregnates the fibers (16) of the reinforcement layer(s) (17) in order to form a prepreg (10);
the method comprising, in the production tool (28), the following consecutive steps:
- heating the complex (24) to a temperature higher than the melting temperature of the thermoplastic material (13) without applying pressure on said complex (24),
- heating the complex (24) to a temperature higher than the melting temperature of the thermoplastic material (13) while applying a production pressure higher than atmospheric pressure on the complex (24),
the method for manufacturing being **characterized in that** it comprises the following consecutive steps, before placing the complex (24) in the production tool (28):
- placing at least the matrix sheet (18) in a treatment tool (26),
- heating said sheet (18) to a temperature lower than the melting temperature of the thermoplastic material (13).

2. The method for manufacturing a prepreg (10) according to claim 1, wherein the matrix sheet (18) is placed in the treatment tool (26) with the rest of the complex (24).

3. The method for manufacturing a prepreg (10) according to claim 1 or 2, wherein the matrix sheet (18) is crushed in the treatment tool (26) by applying pressure on said sheet (18).

4. The method for manufacturing a prepreg (10) according to any of the preceding claims, wherein the temperature of the treatment tool (26) is between 70° C. and 200° C, and advantageously equal to 150°C.

5. The method for manufacturing a prepreg (10) according to any of the preceding claims, wherein the thermoplastic material (13) comprises polyethylene terephthalate.

6. The method for manufacturing a prepreg (10) according to any of the preceding claims, wherein the complex (24) comprises at least two matrix sheets (18) placed on a first side (20) of the reinforcement layer (17), and at least one matrix sheet (18) placed on a second side (21) of said reinforcement layer (17).

7. The method for manufacturing a prepreg (10) according to claim 6, wherein the complex (24) comprises at least two reinforcement layers (17), each reinforcement layer (17) being placed between at least two matrix sheets (18) on a first side (20) and at least one matrix sheet (18) on a second side (21).

8. The method for manufacturing a prepreg (10) according to claim 7, wherein the reinforcement sheets (17) have at least two different fiber (16) orientations.

9. The method for manufacturing a prepreg (10) according to claim 8, wherein the formation of the complex (24) comprising said reinforcement sheets (17) having at least two different fiber (16) orientations is done outside the production tool (28).

10. The method for manufacturing a prepreg (10) according to any of the preceding claims, wherein the pressure applied on the complex (24) by the production tool (28) is between 1 bar and 20 bars, preferably between 2 bars and 10 bars
